# EUROPEAN PATENT APPLICATION

(11) **EP 2 562 136 A1**
(43) Date of publication of application: **27.02.2013**
(21) Application number: 11178807.1
(22) Date of filing: 25.08.2011
(51) Int. Cl.: C01B 13/10

(54) **Distribution of a gas to a plurality of recipients**

(71) Applicant: Primozone Production AB, 246 42 Löddeköpinge (SE)
(72) Inventor: Golshenas, Arash, S-211 47 Malmö (SE)
(74) Representative: Plougmann & Vingtoft A/S

(57) **Abstract**

A modular system comprising a gas input which is connectable to a source of a gas for receiving an input flow of the gas, and is connectable to a plurality of recipients (R1, RN) for supplying the gas to the recipients in accordance with respective demands for the gas of the recipients. The system comprises, for each recipient, a module associated therewith, where each module has an input for receiving a signal indicative of the demand for the gas of the associated recipient, and means for controlling the flow of the gas to the associated recipient to its demand for the gas. The system is particularly useful for distribution of ozone to different recipients such as fish tanks in a fish farm.

## Description

### FIELD OF THE INVENTION

This invention relates to distribution of a gas to a plurality of units with individual demands for the gas, in particular ozone. Ozone is used for treating the water so as to purify the water. Examples of such use are purification of drinking water, water in swimming pools and spas, fish tanks in a fish farm, and also treatment of wastewater and sludge.

### BACKGROUND OF THE INVENTION

Ozone is an unstable gas that cannot be stored and transported over extended periods of time without decaying to oxygen, and ozone is therefore produced on demand at the location where it is needed. Ozone is produced from an oxygen-containing gas such as atmospheric air or preferably from oxygen-enriched air, possibly high-purity oxygen. Oxygen can be supplied in containers from an independent supplier, or it can be produced locally.

Farming of fish involves raising fish commercially in tanks or ponds. A fish farm will usually have several tanks or ponds, possibly with different species of fish and/or fish where the biomass determined by the size and number of the fish in each tank increases until the fish are harvested. Individual tanks may be at different stages in the cycle from start to harvesting and the biomass will be correspondingly different. The need for ozone for treating the water depends on the degree of pollution of the water and the need for ozone will therefore vary individually for each tank during the cycle. Furthermore, the individual need for ozone in the tanks will also depend on the time food is dispensed to the fish in the tank and on the temperature of the water. In order to maintain a good quality of the water in each tank it is therefore necessary to supply ozone individually and according to the actual need of each tank.

US 5 106 589 discloses a method of controlling power supplied to an ozone generator delivering ozone to two users of ozone, i.e. a pool and a spa. The flow of ozone to each user is regulated by manually operated metering valves. The setting of either metering valve inevitably affects the flow of ozone to both users. US 4 138 724 discloses a system for distributing ozone to a plurality of ozone utilization devices through an ozone distributor controlled by a central operating unit.

### SUMMARY OF THE INVENTION

The invention provides a modular system comprising a gas input which is connectable to a source of a gas for receiving an input flow of the gas, and is connectable to a plurality of recipients for supplying the gas to the recipients in accordance with respective demands for the gas of the recipients. The system comprises, for each recipient, a module associated therewith, where each module has an input for receiving a signal indicative of the demand for the gas of the associated recipient, and means for controlling the flow of the gas to the associated recipient to its demand for the gas.

A system according to the invention is particularly useful for supplying ozone from one or more ozone generators to a plurality of recipients, where each module regulates the supply of the gas to an associated recipient according to the recipient's demand for the gas. The modularity of the system according to the invention allows inclusion in the system of a module for each recipient. Thus, the system is flexible and can have any number of modules, and if e.g. new recipients are added to the system it is possible to add a corresponding number of modules to the system.

Ozone is an unstable gas and is therefore produced according to an actual demand. The use of ozone for treatment of water is known. In order to supply ozone to water to be treated according to the individual and actual demands for ozone of each recipient it is preferred that the system can be connected to sensors in the water contained in the respective recipients, where the sensors are suitable for sensing a quality of the water and outputting corresponding signals, wherein signals indicative of the demand for ozone are derived from the signals received from the sensors. Preferably, the sensors comprise oxidation-reduction potential (ORP) sensors outputting a signal representing the instantaneous quality of the water in the respective recipients, and the flow of ozone to the recipients can then be regulated to the thus determined actual demand for ozone of each recipient.

Alternatively, regulating the flow of ozone to individual recipients may be done according to a predetermined schedule represented by model or empirical data stored in a memory and that can be retrieved by a controller for controlling the flow of ozone to each recipient. In the case of fish farming the predetermined schedule for the flow of ozone to individual recipients can include events and conditions such as feeding the fish, the measured or estimated growth of the fish, the temperature of the water etc. Other types of sensors may also be used to determine the quality of the water, e.g. sensors for determining the electrical conductivity or the concentration of ozone or presence of other substances and elements in the water. Or the flow of ozone to the individual recipients can be regulated manually, e.g. based on an observed or perceived quality of the water, such as its clarity or colour.

The target or desired quality of the water can be set e.g. by industry standards, by public requirements or by an operator using e.g. a Human Machine interface, whereby the operator can intervene if desired.

When the source of the gas is an ozone generator the system preferably has a controller arranged to determine the total demand for ozone of the recipients and to output a control signal for causing the ozone generator to deliver an input flow of ozone to the system corresponding to the determined total demand for ozone. Hereby the actual production of ozone is adapted to the actual demand for ozone. A suitable ozone generator where the ozone yield can be regulated infinitely is disclosed in WO 2008/074767. Alternatively, two or more ozone generators operating in parallel and which can be individually activated and deactivated can be used to regulate the production of ozone in steps, which has the advantage that relatively simple ozone generators with no provision for other regulation than on/off can be used, and the number of such ozone generators can be deployed according need.

Optionally, a pressure sensor can be arranged to sense the pressure of the input flow of ozone and a controller can be arranged to receive a corresponding signal and to output a control signal for causing the ozone generator to deliver the input flow of ozone under a predetermined pressure. If the measured pressure falls to a value below the predetermined value then the ozone generator is regulated to increase its production until the predetermined pressure is obtained, and correspondingly if the pressure exceeds the predetermined value. This provides another method of regulating the ozone production to the actual demand for ozone.

### BRIEF DESCRIPTION OF THE FIGURES

Figure 1 shows a modular system according to the invention connected to an ozone generator and to a plurality of recipients of ozone for distributing ozone to the recipients, and
Figure 2 shows in more detail the modular system in figure 1 and its components.

### DETAILED DESCRIPTION OF THE INVENTION

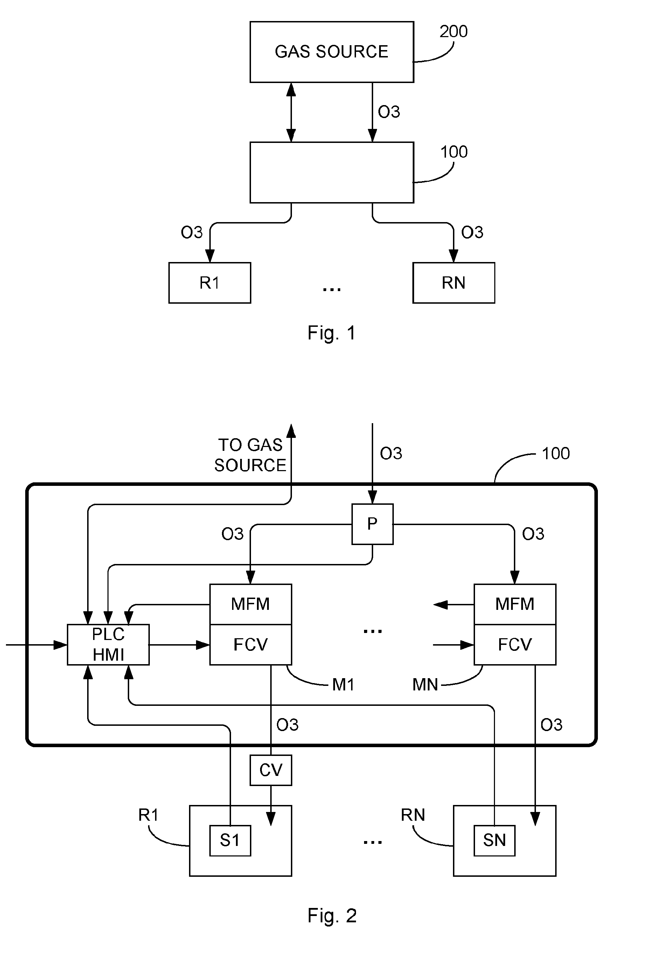

In figure 1 is illustrated a system 100 connected to a source 200 of gas, in this case an ozone generator, and to a plurality of recipients of the gas, R1 to RN. Each line or connection carrying or transporting a flow of the gas is marked with "03". The system receives a flow of the gas, in this case ozone, from the source of the gas and supplies the gas to the recipients in accordance with respective demands for the gas of the recipients. The system 100 is in communication with the source 200 of gas whereby operational data can be exchanged, and in particular the system 100 can communicate instructions to control the functioning of the source 200 of gas such as its yield or production rate measured e.g. in grams/minute.

In figure 2 is shown the system 100 in figure 1 in more detail. The system has an input which here is connected to a source of gas (not shown in figure 2) and receives an input flow of the gas from the source. In this case the gas is ozone and lines or connections carrying or transporting a flow of ozone are marked with "03". The system 100 is also connected to a plurality of recipients R1 to RN for supplying the gas to the recipients in accordance with respective demands for the gas of the recipients. Each recipient R1 - RN can be an industrial or commercial user or consumer of the gas, and in case of the gas being ozone a typical recipient is e.g. a pond or tank in a fish farm, a swimming pool or a spa, a municipal facility for cleaning drinking water or a facility for treating wastewater or sludge, and the totality of recipients can include any combination of such recipients.

The input flow of the gas is divided and fed to each one of a plurality of modules M1 to MN each of which is associated with a recipient R1 to RN for regulating the flow of the gas to the associated recipient to its demand for the gas.

Each one of the modules M1 to MN has means for quantitatively determining the flow of the gas to the associated recipient, in this case a mass flow meter MFM, and a controllable flow control valve FCV that can be controlled to regulate the flow of the gas to the associated recipient. The modules can be individually exchangeable which gives a high degree of flexibility allowing quick and simple expansion and repair, or several modules and/or their functions can be integrated in an assembly in the system.

A controller such as a programmable logic controller PLC which may have Human Machine Interface, HMI, controls the operation of the system 100. An operator may use the Human Machine Interface to monitor and/or influence the operation of the system including the function of individual elements thereof. If desired the operator may thus change settings such as individual target values of water quality and flow of ozone to each recipient. Each of the recipients preferably has a sensor S1 to SN sensing a quality of the water in the recipients and outputting corresponding signals, which are received by the controller. The sensors preferably comprise oxidation-reduction potential (ORP) sensors, but other sensors sensing a quality of the water may also be used. Based on the received signals from the sensors the controller determines the demand for ozone of each recipient and outputs a corresponding signal that is indicative of the demand for ozone to the respective flow control valves.

Each module also has a mass flow meter MFM or other means for quantitatively determining the flow of the gas to the associated recipient, and each mass flow meter outputs a corresponding signal representing the determined mass flow of the gas to the controller, whereby a control loop is established which ensures that the actual flow corresponds to the determined demand for the gas. The control loop can be a PID (proportional integral derivative) controller.

The controller, PLC, may determine the total demand for ozone of the recipients R1 to RN and communicates with the gas source by sending control signals to the gas source suitable for causing the ozone generator to deliver an input flow of ozone to the system corresponding to the determined total demand for ozone. The controller controls the operation of the entire system 100 and may detect any malfunction in any element of the system and control start-up and shut-down routines of any element of the system including generating control signals to the one or more ozone generators and to individual lines supplying ozone to the recipients. The controller may generate control signals for controlling several operating parameters of the one or more ozone generators, including the concentration and the pressure of the received flow of ozone. Thus, at high demands for ozone the ozone generator(s) may be controlled to operate at other operating parameters such as reduced ozone concentration and a corresponding higher flow, whereby the production capacity is increased, possibly at the expense of higher operating costs.

The system may have an optional pressure sensor P arranged to sense the pressure of the input flow of ozone. The controller receives a corresponding signal from the pressure sensor and outputs a control signal for causing the ozone generator to deliver the input flow of ozone under a predetermined pressure. This is an alternative method of ensuring that the ozone generator will deliver an input flow of ozone to the system corresponding to the determined total demand for ozone.

Each or some of the gas outputs to individual recipients may have a check valve CV preventing reverse flow of gas and other fluid from the respective recipient to the system.

Control signals from the PLC controller to the ozone generator and to each of the flow control valves can be a standard 4-20 mA electrical signal which is an industry standard, or they can be digital control signals transmitted according to a protocol, e.g. TCP/IP over Ethernet etc.

Recipients of ozone for water treatment may have different standards for the quality of the water. Thus, drinking water, water in a swimming pool or in a fish tank may have different target values for the quality of the water, and the controller may have individual data representing such target values stored in a memory for each recipient.

## Claims

1. A modular system (100) comprising a gas input connectable to a source (200) of a gas for receiving an input flow of the gas, the system (100) connectable to a plurality of recipients (R1, RN) for supplying the gas to the recipients (R1, RN) in accordance with respective demands for the gas of the recipients (R1, RN), the system comprising, for each recipient (R1, RN), a module (M1, MN) associated therewith, each module (M1, MN) having
- an input for receiving a signal indicative of the demand for the gas of the associated recipient (R1, RN), and
- means for regulating the flow of the gas to the associated recipient (R1, RN) to its demand for the gas.

2. A system (100) according to claim 1 wherein the means for regulating the flow of the gas includes
- means (MFM) for quantitatively determining the flow of the gas to the associated recipient (R1, RN), and
- a flow control valve (FCV) for regulating the flow of the gas to the associated recipient (R1, RN).

3. A system (100) according to any one of claims 1 and 2 wherein each recipient (R1, RN) contains water and the gas is ozone for treating the water.

4. A system (100) according to claim 3 further being connectable to sensors (S1, SN) in the water contained in the respective recipients (R1, RN), the sensors (S1, SN) for sensing a quality of the water and outputting corresponding signals receivable by the system (100), wherein the signals indicative of the demand for ozone are derived from the signals received from the sensors (S1, SN).

5. A system (100) according to claim 4 wherein the sensors (S1, SN) comprise oxidation-reduction potential sensors.

6. A system (100) according to claim 3 wherein the signals indicative of the demand for ozone are received from a controller (PLC) having a Human Machine Interface and derived through interaction with a human operator.

7. A system (100) according to any one of the preceding claims wherein the source of the gas (200) is an ozone generator and a pressure sensor (P) is arranged to sense a pressure of the input flow of ozone and a controller (PLC) is arranged to receive a corresponding signal and to output a control signal for causing the ozone generator (200) to deliver the input flow of ozone under a predetermined pressure.

8. A system (100) according to any one of claims 1-6 wherein the source of the gas (200) is an ozone generator and the system has a controller (PLC) arranged to determine the total demand for ozone of the recipients (R1, RN) and to output a control signal for causing the ozone generator (200) to deliver an input flow of ozone to the system corresponding to the determined total demand for ozone.

9. A system (100) according to any one of claims 1 and 2 having a controller (PLC) and a memory storing data retrievable by the controller for controlling the flow of the gas to the recipients (R1, RN).

10. A system (100) according to any one of the preceding claims wherein a check valve (CV) is arranged to prevent reverse flow of gas and other fluid from the respective recipient (R1, RN) to the system.

11. A module for use in a system according to any one of claims 1-10, the module comprising
- an input for receiving a signal indicative of the demand for the gas of a recipient (R1, RN),
- means (MFM) for quantitatively determining the flow of the gas to the recipient (R1, RN), and
- a flow control valve for regulating the flow of the gas to the recipient (R1, RN) to its demand for the gas.
